# EUROPÄISCHE PATENTSCHRIFT

(11) **EP 2 436 947 B1**
(45) Veröffentlichungstag und Bekanntmachung des Hinweises auf die Patenterteilung: **17.06.2015**
(21) Anmeldenummer: 11182940.4
(22) Anmeldetag: 27.09.2011
(51) Int. Cl.: F16F 6/00, B60H 1/34, F16F 15/03, H01F 7/02

(54) **Einrichtung zur Erzeugung einer Bedienkraft und der Dämpfung der Bewegung**
Device for generating operating force and the dampening of the movement
Dispositif destiné à la production d'une force de commande et à l'amortissement du mouvement

(30) Priorität: 30.09.2010 DE 202010008672 U; 19.10.2010 DE 202010008838 U; 11.11.2010 DE 202010009010 U
(43) Veröffentlichungstag der Anmeldung: 04.04.2012
(73) Patentinhaber: Dr. Schneider Kunststoffwerke GmbH, 96317 Kronach (DE)
(72) Erfinder: Trinkwalter, Bernd, 96328 Küps (DE); Ring, Alexander, 96317 Kronach (DE)
(74) Vertreter: Pröll, Jürgen

(56) Entgegenhaltungen:
- EP-A2- 1 858 234
- DE-U1- 20 120 797
- FR-A1- 2 849 669
- FR-A3- 2 910 695
- JP-A- S5 826 616

## Beschreibung

Die Erfindung betrifft eine Einrichtung zur Dämpfung der Bewegung eines entlang einer Lamelle verschiebbar angeordneten Bedienelementes mit den Merkmalen des Patentanspruches 1.

Bedienelemente und Einrichtungen zur Dämpfung der Bewegung eines Bedienelementes sind hinlänglich bekannt.

So sind beispielsweise Bremselemente bekannt, welche das kontrollierte Öffnen und Schließen von Hauben bei Kraftfahrzeugen, Fächern, Schubladen usw. ermöglichen. Derartige Bremselemente sind insbesondere geeignet zum Einsatz für Schwenkbewegungen von Deckeln, von Tapedecks, Photokopierern, Deckeln, Rückschlagventilen, usw. Bei Bedienelementen ist es bekannt, über die Reibung zwischen zwei Teilen eines Bedienelementes, welche relativ zueinander bewegbar sind, Bedienkräfte einstellbar auszugestalten.

So ist aus DE 100 61 030 A1 eine Bremseinrichtung für ein sich um eine Achse drehendes Element, wie ein Bedienrad, ein Drehknopf, eine Walze oder dergleichen, insbesondere für eine Frischluftdüse in einem Kraftfahrzeug, bekannt, das zur Erzielung eines konstanten Drehmomentes bzw. einer konstanten Bedienkraft des sich drehenden Elementes in einem Temperaturbereich von beispielsweise -40° C bis ca. 100°C ermöglicht. Hierzu ist ein stopfenförmiges Gehäuse mit einem Boden und einem vom Boden wegstehenden umlaufenden Bund mit einer kreisrunden Außenmantelfläche vorhanden, die für das sich drehende Element eine Drehlagerfläche bildet. Der Bund umschließt einen zentralen Führungsraum für zwei Bremsorgane, die sich diametral zu den voneinander abgewandten Bremsabschnitten durch Querlöcher im umlaufenden Punkt hin erstrecken.

Aus DE 100 35 687 A1 ist ein Bewegungsdämpfer mit einem Gehäuse, einem gegenüber dem Gehäuses beweglich gelagerten Verbindungsglied, welches mit einem in seiner Bewegung zu dämpfenden, beweglichen Teil verbindbar ist und mit einem zweigeteilten Dämpfungsglied, welches einen Permanentmagneten und einen Gegenpol aufweist, bekannt. Die Bewegung des Verbindungsgliedes im Gehäuse ist durch die Magnetkraft zwischen dem Permanentmagneten und dem Gegenpol gedämpft. Der Abstand zwischen dem Permanentmagneten und dem Gegenpol ist gegenüber einer oberen und einer unteren Grenzstellung durch eine Drehung des Verbindungsgliedes gegenüber dem Gehäuse veränderbar. Bei einer solchen Drehung stellen sich der obere Grenzstellungsabstand des Verbindungsgliedes in eine Richtung und der untere Grenzstellungsabstand bei Drehung des Verbindungsgliedes in entgegen gesetzter Richtung ein.

Aus DE 33 06 180 A1 ist ein Magnetringstoßdämpfer bekannt. Hierbei sind mehrere Dauermagnete bzw. Elektromagnete angeordnet, deren Magnetfelder sich gegenseitig abstoßen bzw. anziehen. Diese magnetischen Kräfte dämpfen neben dem Öldruck, der im Stoßdämpfer vorhanden ist, die einwirkenden Stoßkräfte.

Aus DE 299 13 725 U1 ist eine magnetische Dämpfungseinrichtung für ein Übungsgerät bekannt. Die Dämpfungseinrichtung besteht aus einer Scheibe mit einem Flansch, welcher sich vom Umfang der Scheibe nach außen erstreckt, wobei die Scheibe ein Loch aufweist und mehrere magnetische Elemente am Flansch angeordnet sind. Eine Einstellrichtung mit zwei Teilen ist vorgesehen, wobei jedes Teil als teilkreisförmiges Element ausgebildet ist und eine jeweilige erste Halterung an einem ersten Ende aufweist, welche schwenkbar mit dem Rahmen der Übungseinrichtung verbunden ist, wobei ferner jedes Teil eine zweite Halterung aufweist, welche sich von einem Ende derart erstreckt, dass eine Feder zwischen den beiden weiteren Halterungen anordenbar ist. Außerdem ist eine Welle vorgesehen, welche sich zwischen den beiden Teilen durch das Loch der Scheibe erstreckt und eine Nockeneinrichtung, welche zum Verbinden mit im Rahmen ausgebildet ist und drehbar zwischen den beiden weiteren Halterungen der beiden Teile angeordnet ist, so dass die beiden Teile relativ zu den magnetischen Elementen durch drehende Nockeneinrichtung, welche die beiden Halteeinrichtungen voneinander wegdrückt, beweglich ist. Schließlich ist das Grundprinzip der Wirbelstrombremse bekannt, mittels welcher kinetische Bewegungsenergie abbaubar ist.

Aus DE 38 057 04 C1 ist eine elektromagnetische Einflächenbremse zum Kuppeln zweier gegeneinander drehbarer Teile angegeben, mit einer ferromagnetischen Bremsscheibe, die den Polen eines Elektromagneten gegenübersteht und auf einer gegenüber dem Elektromagneten drehbaren Welle drehfest und axial verschiebbar gehalten ist. Zur selbständigen Nachstellbarkeit und zur Verhinderung, dass die Bremsscheibe aufgrund freier Beweglichkeit auf der sie tragenden Welle Klappergeräusche hervorruft, ist sie auf der dem Elektromagneten abgewandten Seite mit einer Dämpfungsscheibe aus einem elastischen Material versehen, die eine Bohrung aufweist, die im entspannten Zustand etwas enger ist, als der Querschnitt der tragenden Welle, so dass die Dämpfungsscheibe unter leichter Pressung auf der Welle sitzt.

Aus der FR 2 910 695 A3 ist ein System zum Einsatz in einem Kraftfahrzeug, vorzugsweise in einem Fahrzeugsitz mit einer Kopfstütze, offenbart. Die Kopfstütze weist eine Schubstange auf, die in eine in der Oberseite des Sitzes parallel zu dessen Seitenkanten angeordnete Hülse einschiebbar ist. Durch eine Veränderung der Einschubtiefe der Schubstange in die Hülse im Sitz ist die Höhe der Kopfstütze gegenüber der Oberseite des Sitzes variierbar. In der Schubstange sind jeweils äquidistant eine Reihe von Einkerbungen vorgesehen, die der Anzahl der Magnete bzw. magnetisierten Zonen an der Schubstange entsprechen. In der Hülse sind ebenfalls Magnete bzw. magnetisierte Zonen vorhanden. Die Magnete bzw. magnetisierten Zonen umfassen alternierend positive und negative Pole. Die Einkerbungen zeigen einem Nutzer Einschubpositionen der Schubstange in die Hülse an, die zur relativen Positionierung der Schubstange gegenüber der Hülse dienen und die Positionen repräsentieren, an denen die magnetischen Kräfte der Magnete bzw. der magnetisierten Zonen der Hülse und der Schubstange im Gleichgewicht stehen und die Schubstange gegenüber der Hülse in einer solchen Position verbleibt. Solche Positionen sind als Gleichgewichtspunkte bezeichnet und werden durch die Anziehung der Pole der Magnete bzw. der magnetisierten Zonen der Schubstange und der Hülse durch Abstoßung bzw. Anziehung benachbarter Pole der Magnete bzw. der magnetisierten Zonen ausgebildet.

Aus EP 1 858 234 A2 ist ein Schiebemechanismus, insbesondere ein Schiebemechanismus für ein elektronisches Gerät, offenbart. Der Schiebemechanismus weist einen ersten und einen zweiten Teil auf. Der erste und zweite Teil gleiten beweglich relativ zueinander zwischen einer ersten Konfiguration und einer zweiten Konfiguration. Die ersten und zweiten Teile weisen jeweils erste und zweite Magnetelemente auf, die einander anziehen, um eine Vorspannung der ersten und zweiten Teile in Richtung einer ersten Konfiguration zu erreichen.

Aus DE 201 20 797 U1 ist ein magnetisches Dämpfungssystem offenbart. Das Dämpfungssystem besteht aus einem zylindrischen, in sich geschlossenen Körper, aus einem Kolben (Stößel und Metallplatte) und mehreren Dauermagneten.

In dem zylindrischen und geschlossenen Körper, der aus nicht magnetischem Material besteht, bewegt sich ein Kolben (axial). Durch die Dauermagnete, die sich ebenfalls im Körper befinden und nach bestimmten Reihenfolgen angeordnet werden können, ist eine sehr sensible Steuerung und Dämpfung des Kolbens bzw. von Geräten, Armaturen etc. ..., die mit dem Kolben verbunden sind, möglich. Die Steuerung des Kolbens und die Schwingungseigenschaften der am Kolben zu befestigten Geräte werden durch den Aufbau bzw. durch die Stärke des Magnetfeldes im Innern des Zylinders gekennzeichnet und beeinflusst.

Bei der Verwendung von magnetischen Bremsen hat sich ferner gezeigt, dass Verraststellungen haptisch nicht wahrnehmbar sind, so dass beispielsweise die Mittenstellung eines Schiebeelementes auf einer Lamelle einer Düse nicht erfassbar ist. Des Weiteren sind in der Regel auch keine Wegbegrenzungen durch Anschläge vorgesehen, die eine Bewegung unterstützen oder dämpfen.

Nachteilig beim vorgenannten Stand der Technik ist ferner, dass bei der Erzeugung von linearen oder rotativen Bedienbewegungen von Bedienelementen zu deren Dämpfung nur reine mechanische Reibungskräfte verwendet werden. Dies ist verschleißintensiv und die Bedienkräfte sind über die Lebensdauer des Bedienelementes gesehen nicht gleich bleibend, sondern verändern sich in Abhängigkeit des hervorgerufenen Verschleißes aufgrund der mechanischen Reibung.

Der Erfindung liegt die Aufgabe zu Grunde, eine Einrichtung der gattungsgemäßen Art derart auszugestalten, dass beim Verschieben eines beweglichen Elementes gegenüber einem stationären Element Raststellungen spürbar sind und eine nahezu verschleißfreie Einrichtung zu schaffen, die ein optimal abstimmbares Betätigungsgefühl für den Benutzer, einen sogenannten Sattlauf, zwischen den Rast- und Endstellungen vermittelt.

Diese Aufgabe löst die Erfindung durch Ausgestaltung der Einrichtung mit den im Patentanspruch 1 angegebenen Merkmalen. Vorteilhafte Weiterbildungen der Erfindung sind in den Unteransprüchen im Detail angegeben.

Gemäß der erfinderischen Lehre ist vorgesehen, dass das stationäre Element und das bewegliche Element jeweils einen magnetisch wirksamen Teilbereich aufweisen und dass das bewegliche Element und das stationäre Element zumindest partiell eine solche bauliche Ausgestaltung aufweisen, dass die magnetischen Anziehungskräfte in der deckungsgleichen Verschiebeposition der Ausgestaltung gegenüber der nicht deckungsgleichen Position wesentlich erhöht sind und den haptischen Eindruck einer Rastung vermitteln oder Rastmittel durch den magnetisch wirksamen Teilbereich betätigbar sind. Diese Lehre eröffnet dem Fachmann diverse Ausgestaltungsmöglichkeiten.

Beispielsweise kann ein kleiner, schlanker Dauermagnet in einem Kunststoffschlitten mit einem geringen Seitenabstand zu einem abgewinkelten Teil einer Führungsschiene angeordnet sein, in der der Kunststoffschlitten mit dem Magneten verschiebbar gelagert ist. Die Schiene besteht aus einem magnetisch gleitenden Material, beispielsweise einem Stahlblech. Dieses kann an den Enden auch hochgebogen ausgeführt sein, so dass beim Verschieben ein natürlicher Anschlag gegeben ist. Wenn der Magnet die Schiene übersteht und die Schiene mindestens einen Ansatz aufweist, der von dem überstehenden Magneten überstrichen wird, so ist ersichtlich, dass dann, wenn die beiden Ausgestaltungen, nämlich einerseits der überstehende Magnet und der Ansatz an der Führungsschiene andererseits, zur Deckung kommen und eine erhöhte Anziehungskraft ausgeübt wird, dies beim Verschieben dazu führt, dass der Bediener haptisch eine Raststellung feststellt. Die Ansätze können über die Länge der Schiene vorgesehen sein, ob nun in gleichen Abständen oder in ungleichen Abständen. In jedem Fall wird jedes Mal bei deckungsgleicher Anordnung der baulichen Ausgestaltung an der Schiene und dem Magneten der haptische Eindruck einer Rastung vermittelt. Solche Ausgestaltungen können auch Verzahnungen sein.

In einer Alternative ist ferner vorgesehen, dass ein Rastmittel durch magnetisch wirksame Teilbereiche betätigbar ist bzw. solche betätigbar sind. Dies kann in einfacher Weise beispielsweise dadurch erfolgen, dass der Magnet selbst in einem Kunststoffschlitten höhenbeweglich angeordnet ist und beim Überfahren einer Schiene mit einer untenseitig angeformten Spitze in eine Ausnehmung im Bodenteil der Schiene einrastet. Die Flanken des Rastansatzes an dem Magneten sollten dabei so ausgebildet sein, dass durch Ausübung einer Schiebekraft ein Herausfahren aus der Ausnehmung möglich ist. Dieselben Ausgestaltungen, die zuvor beschrieben sind, können auch bei einem rotierenden Element, beispielsweise bei einem Einstellelement für die Klappen einer Düsenanordnung in der Wand eines Fahrgastraumes eines Kraftfahrzeuges zur Anwendung kommen. In diesem Fall sind die entsprechenden Führungen als Segmente anzubringen und der Magnet auf einer Plattform vorzusehen, damit er verdreht werden kann.

Auch ist es möglich, anstelle eines Schlittens aus Kunststoff einen Magneten in einer entsprechenden Form herzustellen, der dann mit einem größeren Teil in einer Winkelschiene oder einer U-förmige Schiene verschiebbar ist und im Bereich der überstehenden Ansätze der Schiene einen Magnetansatz aufweist, der eine erhöhte Bremskraft und damit einen haptischen Eindruck einer Rastung bei deckungsgleicher Anordnung der Ansätze vermittelt. Weiterhin ist es möglich, anstelle eines festen Arretierungsansatzes an dem Magneten oder auch an einem Schlitten, in dem der Magnet enthalten ist, einen Rastschieber vorzusehen, der in einer Führung am Magnet geführt ist und durch das Magnetfeld im Bereich einer Rastung im Bodenteil der Führungsschiene einrastet, wenn der Magnet über diesen Bereich geschoben wird. Auch in diesem Fall sollten die seitlichen Flanken des Rastschiebers so ausgebildet sein, dass sie mit den Kanten der Rastmulde oder Rastausnehmung zusammenwirken und zwangsweise zu einer Verschiebung des Rastschiebers nach oben führen und so die Verschiebung freigeben, wenn eine erhöhte Schiebekraft auf den Magneten ausgeübt wird.

Selbstverständlich können auch anstelle eines einzelnen Dauermagneten mehrere gemeinsam wirkende Dauermagnete zu einem Verbund zusammengefasst sein, um die Wirkung zu erzielen. Wenn darüber hinaus an den seitlichen Enden der Führungsschienen Anformungen aus magnetisch leitendem Material gegeben sind, so wird der Schieber in der jeweiligen Endposition hieran fixiert. Werden dort hingegen gegenpolige Magnete angesetzt, so ist eine dämpfende Annäherung möglich. Solche Führungsschienen können selbstverständlich auch in Bauelementen integriert sein, so dass auf kleinstem Bauraum die erfindungsgemäße Ausgestaltung realisierbar ist, gleich ob es sich um längsverschiebliche Verschiebeelemente oder um Dreheinstellelemente handelt.

Die vorliegende Erfindung bewirkt neben der Feststellung einer haptischen Raststellung durch den Benutzer eine Dämpfung der Bewegung eines Bedienelementes und besteht aus einem stationären Element und einem gegenüber dem stationären Element angeordneten beweglichen Element. Zwischen dem beweglichen Element und dem stationären Element bildet sich mittels einer magnetischen Anziehungskraft eine Haftkraft im stationären Zustand beider Elemente zueinander und eine Reibkraft bei relativer Bewegung beider Elemente zueinander aus. Das stationäre Element und das bewegliche Element weisen jeweils einen magnetisch wirksamen Teilbereich auf. Zwischen dem beweglichen Element und dem stationären Element ist zumindest partiell eine Beschichtung angeordnet.

Die Beschichtung kann eine Elastomer- oder Polymerschicht sein. Die Elastomerschicht ermöglicht eine definierte Reibkraft und Haftkraft zwischen den beiden Elementen, in Abhängigkeit der magnetischen Anziehungskraft. Mittels der Wahl der Dicke der Elastomerschicht kann der Abstand zwischen den magnetisch wirksamen Teilen variiert werden. Außerdem kann durch die Auswahl der Elastomerschicht die Reibkraft gewählt werden. Schließlich kann die Elastomerschicht mittels eines Zwei-Komponenten-Spritzgußverfahrens aufgebracht werden.

Es hat sich als besonders vorteilhaft erwiesen, dass am und/oder im stationären Element oder am und/oder im beweglichen Element ferromagnetische Elemente angeordnet sind oder dass das stationäre Element oder das bewegliche Element zumindest teilweise aus magnetisierbarem Material bestehen.

Nach einer anderen Ausführungsform ist vorgesehen, dass die Betätigungskraft zur Bewegung des beweglichen Elements gegenüber dem stationären Element vorrangig vom mindestens einen Magneten hervorgerufen ist und die Relativbewegung des beweglichen Elements gegenüber dem statischen Element eine Rotationsbewegung oder eine lineare Bewegung ist.

Auch können das bewegliche Element und das stationäre Element in einem Gehäuse oder an einer Vorrichtung angeordnet sein.

Gemäß einer anderen Ausführungsform ist vorgesehen, dass die Elastomerschicht am beweglichen Element oder am stationären Element angeordnet ist. Ebenso kann die Elastomerschicht am Magneten angeordnet sein.

Die Einrichtung kann grundsätzlich eine Drehbewegung oder eine lineare Bewegung ermöglichen, z. B. kann die Einrichtung ein Drehregler, ein Drehstellregler, ein Schieberegler oder ein Schieber sein. Der Drehregler oder der Drehstellregler kann zur Einstellung einer elektrischen Größe eines elektrischen oder elektronischen Gerätes oder zur Ein- oder Verstellung einer mechanischen Einrichtung, insbesondere der Stellung einer Luftklappe in einem Kraftfahrzeug, dienen. Die Einrichtung kann auch aus einem Schiebeelement und einer Lamelle bestehen, wobei das Schiebeelement auf der Lamelle angeordnet ist.

Gemäß einer solchen Ausführungsform ist vorgesehen, dass die Lamelle mit dem Schiebeelement Bestandteil einer Luftdüse zur Führung eines Luftstroms aus einem Luftzuführschacht oder aus einer Luftzuführleitung in Hei zungs-, Lüftungs- oder Klimaanlagen, insbesondere für Fahrgasträume in Kraftfahrzeugen, ist, wobei die Luftdüse aus einem Gehäuse besteht, das in einen Wanddurchbruch einsetzbar oder hinter einem solchen montierbar ist und einen rückseitigen Anschluss für einen Luftzuführschacht oder eine Luftzuführleitung sowie eine vorderseitige Luftausströmöffnung aufweist, wobei das Gehäuse mindestens einen Lamellenblock aufweist, in welchen die Lamelle einsetzbar und mit weiteren Lamellen gekoppelt ist.

Das Schiebeelement kann die Lamelle zumindest an einer Seite formschlüssig umgreifen.

Auch kann vorgesehen sein, dass das Schiebeelement aus einem Griffvorderteil und einem Griffhinterteil besteht, welche miteinander über eine Steckverbindung verbindbar sind. Dabei hat es sich als besonders vorteilhaft erwiesen, dass der Magnet im Griffvorderteil des Schiebeelements angeordnet ist und der Magnet im Griffvorderteil von mechanischen Halterungen gehalten ist oder dass der Magnet mit dem Griffvorderteil verklebt ist.

Die Lamelle kann eine Vertiefung, z. B. eine in Längs- und/oder Querrichtung U-förmige Vertiefung aufweisen.

In die Vertiefung kann mindestens ein Magnet oder zumindest partiell ferromagnetisches oder magnetisierbares Material eingebracht sein.

In die Vertiefung kann eine Profilschiene eingelassen oder eingefügt sein, in der der Magnet verschiebbar gefasst ist und die die beschriebene Bauform aufweist. Die Profilschiene, die die Führungsschiene bildet, kann z. B. eine L-Schiene oder eine U-Schiene sein. Die Profilschiene sollte aus einem ferromagnetischen oder einem anderen magnetisierbaren Material oder zumindest aus Teilen von ferromagnetischem oder magnetisierbarem Material bestehen.

Als besonders vorteilhaft hat es sich erwiesen, die Profilschiene oder die Vertiefung oder den Magneten mit einer die Bewegung dämpfenden Beschichtung zu versehen. Diese Beschichtung kann aus thermoplastischem Kunststoff, Epoxidharz, Elastomer oder Gleitlack bestehen.

Die Bedienkraft der Einrichtung ist durch die Art und Dicke der Beschichtung, die Stärke des mindestens einen Magneten und die Art der magnetischen Eigenschaft der Profilschiene oder durch die Vertiefungen einstellbar. Ferner hat es sich als besonders vorteilhaft erwiesen, Bremsbeläge aus Silikonelastomeren oder Kunststoff oder aus kunststoffgebundenen Magneten herzustellen. Auch können die Bremsbeläge im Zwei-Komponenten-Verfahren auf das ferromagnetische Trägermaterial aufgebracht oder aufgespritzt sein.

Bei einer anderen Ausführung ist vorgesehen, dass die Einrichtung ein Magnetsystem, bestehend aus dem Magneten, dem Gegenmagneten bzw. der metallischen oder aus magnetisierbarem Material bestehenden Element und einem Luftspalt, enthält. Bei der Ausübung einer Bewegung auf das Element wirkt dieser Bewegung eine Gegenkraft entgegen. Diese Gegenkraft wird erzeugt durch die magnetische Anziehungskraft zwischen dem Magneten, dem Gegenmagneten bzw. dem metallischen oder aus magnetisierbarem Material bestehenden Element, zwischen welchem die Einheit angeordnet ist und mit welchem die Einheit in die Elastomerschicht gedrückt wird. Diese Bewegung der Einheit über die Elastomerschicht erzeugt eine Reibkraft. Diese Reibkraft bewirkt die Dämpfung der Bewegung.

Die Verformung der Elastomerschicht wirkt sich auf die Reibkraft in Form der Gleitreibung der Einheit aus und bewirkt damit die Dämpfung der Bewegung.

Im Folgenden wird die Erfindung anhand der in den Zeichnungen dargestellten konkreten Ausführungsbeispiele exemplarisch erläutert. Diese Beschreibung der Erfindung anhand der konkreten Ausführungsbeispiele stellt keine Limitierung der Erfindung auf eines dieser konkreten Ausführungsbeispiele dar. Die Ausführungsbeispiele zeigen die Erfindung anhand diverser Ausführungsformen und zum Teil in speziellen Ausgestaltungen.

Es zeigen:
- FIG 1: in einer perspektivischen, vereinfachten Darstellung einen Prinzipaufbau eines erfindungsgemäßen Schiebeelementes,
- FIG 2: eine Variante zu dem Ausführungsbeispiel in FIG 1,
- FIG 3: eine Variante zu dem Ausführungsbeispiel in FIG 1,
- FIG 4: in einer perspektivischen Darstellung einen Prinzipaufbau eines Schiebeelementes mit einem Rastschieber,
- FIG 5: ein Ausführungsbeispiel anhand eines Prinzipaufbaus eines erfindungsgemäßen Schiebeelementes mit Rastelement,
- FIG 6: ein Schiebeelement auf einer Lamelle einer Luftdüse,
- FIG 7: einen Schnitt durch ein Schiebeelementangeordnet auf einer Lammelle gemäß FIG 1,
- FIG 8: einen weiteren Schnitt durch ein Schiebeelement angeordnet auf einer Lammelle gemäß FIG 1,
- FIG 9: das Schiebeelement mit der Lammelle gemäß FIG 1 in einer Explosionsdarstellung,
- FIG 10: einen Prinzipaufbau eines erfindungsgemäßen Schiebeelements.

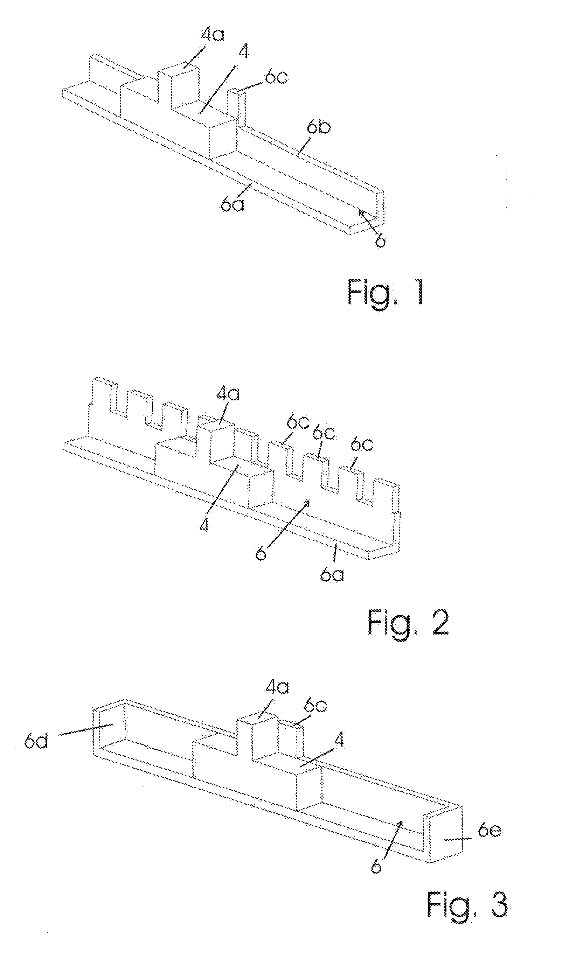

Bei der Figurenbeschreibung wurden bei FIG 1 bis FIG 5 und FIG 6 bis FIG 10 für gleiche Elemente identische Bezugszeichen verwendet. Dies ermöglicht eine einfachere Darstellung und eine bessere Verständlichkeit der Erfindung.

In FIG 1 ist in einer perspektivischen vereinfachten Darstellung der Prinzipaufbau eines erfindungsgemäßen Schiebeelementes dargestellt. Dieses besteht im Wesentlichen aus einer Führungsschiene 6, die eine profilierte Winkelschiene ist und einen unteren horizontalen Schenkel 6a und einen Vertikalschenkel 6b aufweist. Die Schiene 6 besteht beispielsweise aus verzinktem Stahlblech oder einem anderen magnetisierbaren Werkstoff, z. B. aus ferromagnetischem Material. In dem Winkel ist gleitend ein Dauermagnet 4 verschiebbar gelagert. Dieser Dauermagnet 4 ist in Form eines angeformten Ansatzes 4a ausgestaltet, der den Dauermagneten 4 übersteht. Des Weiteren ist an dem vertikalen Schenkel 6b nach oben vorstehend ein Ansatz 6c vorgesehen, der sich nach oben erstreckt und damit in Deckung mit dem Ansatz 4a an den Magneten 4 gelangt, wenn der Magnet nach rechts verschoben wird. Es ist ersichtlich, dass dann, wenn der Ansatz 4a am Magneten 4 über den Luftspalt in Kontakt mit dem Ansatz 6c an der Führungsschiene 6 gelangt, die Bremskraft beim Verschieben wesentlich erhöht wird und sogar der Ansatz 4a an dem Ansatz 4c haftet. Die Magnetkraft wird also in diesem Bereich wesentlich erhöht, so dass ein Haften gegeben ist. Der Bedienende nimmt diese Stellung gegenüber den übrigen Schiebestellungen haptisch als Raststellung wahr.

Besonders vorteilhaft ist, dass der Dauermagnet 4 sich selbst gegenüber der Führungsschiene 6 zentriert, wenn die Führungsschiene 6 in Form einer Winkelschiene ausgeführt ist oder zumindest gegenüber dem Dauermagneten 4 einen Winkelschiene bildenden Bereich aufweist. Wird er Dauermagnet 4 an den die Winkelschiene bildenden Bereich geführt, so wird der Dauermagnet 4 durch die Winkelschiene bzw. den die Winkelschiene bildenden Bereich gegenüber der Führungsschiene 6 zentriert, aufgrund der wirkenden magnetischen Kräfte zwischen der Führungsschiene 6 und dem Dauermagneten 4 bzw. dem die Winkelschiene bildenden Bereich der Führungsschiene 6 und dem Dauermagneten 4.

In einer vorteilhaften Ausgestaltung der Erfindung wird der die Winkelschiene bildenden Bereich durch die Winkelschiene 6 und den Ansatz 6c an der Führungsschiene 6 gebildet.

In FIG 2 ist eine Abwandlung des Beispiel aus FIG 1 dargestellt, und zwar sind kammartig an dem Vertikalschenkel 6b der Führungsschiene 6 mehrere Ansätze 6a in einer Reihe angeformt, beispielsweise ausgestanzt, so dass beim Verschieben des Magnetes 4 die Magnetansätze 4a entweder in eine Lücke zwischen den Ansätzen 6c oder in Deckung mit einem Ansatz 6c gelangen, wodurch beim kontinuierlichen Verschieben wellenartig Raststellungen wahrnehmbar sind.

In einer vorteilhaften Ausgestaltung der Erfindung sind an der Führungsschiene 6 mehrere eine Winkelschiene bildende Bereiche realisiert, welche durch die diversen Ansätze 6c, die kammartig an der Führungsschiene 6 angeordnet sind, gebildet werden. Damit wird der Dauermagnet 4 nicht nur an einer bestimmten Position entlang der Führungsschiene 6 zentriert, sondern kontinuierlich während der Bewegung entlang der Führungsschiene 6, jedes Mal, wenn er sich einem winkelschienen-bildenden Bereich nähert.

In FIG 3 ist eine weitere Abwandlung dargestellt, aus der ersichtlich ist, dass der Magnet 4 mit seinen seitlichen Enden auch in Kontakt mit den stirnseitig vorgesehenen Wandabschnitten 6e und 6f der Führungsschiene 6 gelangen kann, wodurch der Schiebeweg begrenzt ist und zugleich auch eine Haftkraft ausgeübt wird, die ein ungewolltes Verschieben des Magneten 4 verhindert. Andererseits ist in der Mittenstellung ebenfalls eine Raststellung feststellbar, wenn der Ansatz 4a in Deckung mit dem Ansatz 6c an der Führungsschiene 6 gelangt.

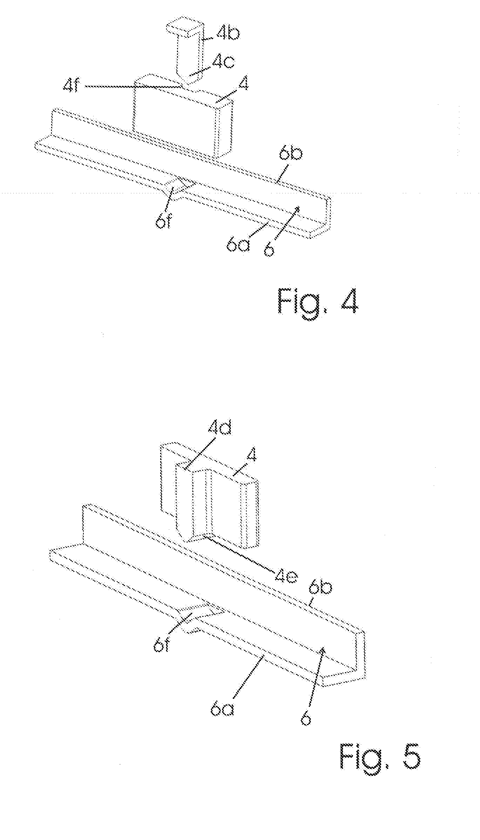

Im Ausführungsbeispiel in FIG 4 ist wiederum eine Führungsschiene 6 als Profilschiene in perspektivischer Darstellung dargestellt. Der Magnet 4 ist abgehoben dargestellt und weist eine senkrechte Lagerausnehmung 4f auf, in der ein Schieberiegel 4b eingesetzt ist. Dieser ist also zwischen dem Magneten 4 und dem senkrechten Schenkel der Führungsschiene 6 gelagert und wird durch das ausgeübte Magnetfeld bei Einnehmen der Stellung oberhalb der Rastmulde 6f in die Rastmulde mit der dreieckförmigen Spitze 4c hineingezogen. Die Spitze 4c weist seitliche Schräggleitflächen auf, die es ermöglichen, dass beim weiteren Verschieben des Magneten 4 diese über die Kanten der Rastmulde 6f herausgleiten. Der Schieberiegel kann auch aus Kunststoff bestehen und fällt durch die Schwerkraft oder einen Federkraft in die Rastmulde 6f und wird über die Schrägflächen bei weiterem Verschieben des Magneten 4 aus der Rastmulde 6f herausgeschoben.

In FIG 5 ist in vereinfachter perspektivischer Darstellung eine weitere Rastvariante dargestellt, bei der an dem Magneten 4 unmittelbar ein Rastansatz 4d angeformt ist, der an der unteren, vorstehenden Spitze schräge Gleitflächen 4e aufweist. Beim Verschieben innerhalb der Führungsschiene 6 übt der Magnet die gewünschte Bremswirkung zur Erzielung einer anmutenden Verschiebung aus. Sobald der untere Keil mit den Schrägflächen 4e in dem Bereich der Rastmulde 6f in dem Horizontalschenkel 6a der Führungsschiene 6 gelangt, fällt der Magnet 4 nach unten in die Rastmulde, kann aber durch weiteres Verschieben wieder herausgedrückt werden, da die schrägen Flächen 4e über die Kanten 6f verschiebbar sind.

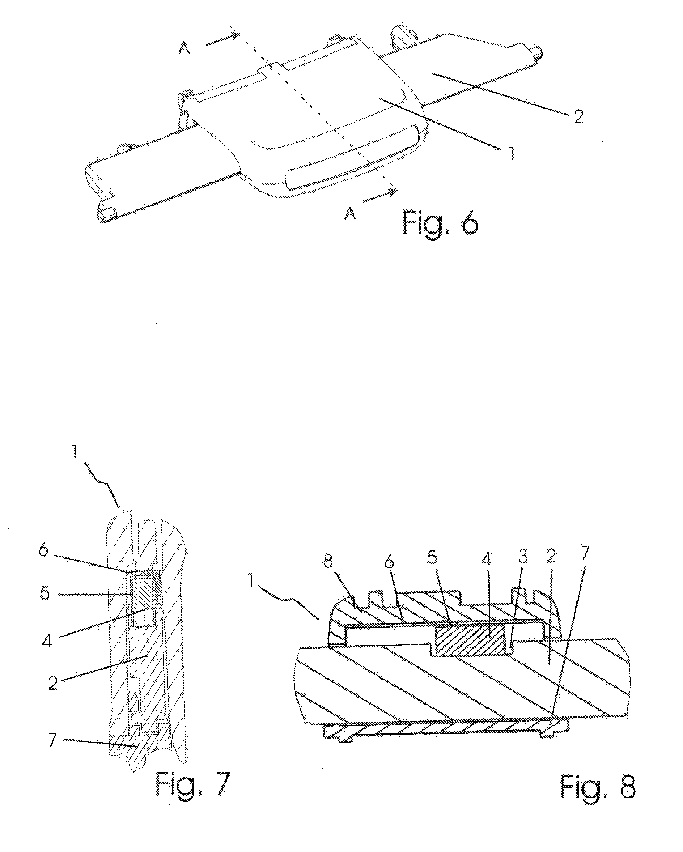

In FIG 6 ist ein Schiebeelement 1 auf einer Lamelle 2, insbesondere einer Lamelle, welche an und/oder in einer Lüftdüse, vorzugsweise in einem Kraftfahrzeug, angeordnet ist, dargestellt. Das Schiebeelement 1 besteht aus einem Griffvorderteil 8 und einem Griffhinterteil 7, welche mittels einer Steckvorrichtung trennbar ausgestaltet sind. Das Schiebeelement 1 umgreift die Lamelle 2 zumindest an einer Seite vollständig, im Ausführungsbeispiel nach FIG 6 an der Oberseite der Lamelle 2. Das Schiebeelement 1 kann entlang der Lamelle 2 in deren Längsrichtung in einem vordefinierbaren Bereich verschoben werden.

Die Lamelle 2 ist dafür vorgesehen, in einen Lamellenblock eingefügt zu werden. Der Lamellenblock wiederum dient zum Einsatz in eine Luftdüse, welche vorzugsweise in einem Kraftfahrzeug im Armaturenbrett einsetzbar ist. An der Lamelle 2 ist das Schiebeelement 1 angeordnet. Das Schiebeelement 1 ist mit der Lamelle 2 in der bereits beschriebenen Weise verbunden. Das Schiebeelement 1 lässt sich in Längsrichtung zur Lamelle 2, d. h. auf die Luftaustrittsöffnung eines Gehäuses einer Luftdüse, in welche die Lamelle im Lamellenblock eingesetzt ist, auf diesen frontal blickend, nach links und rechts verschieben. Zugleich kann durch eine vertikale Bewegung des Schiebeelementes 1 die Ausrichtung der Lamelle 2 und der neben der Lamelle 2 im Lamellenblock angeordneten weiteren Lamellen, welche untereinander mechanisch im Lamellenblock gekoppelt sind, in horizontaler Ebene verändert werden, so dass diese sich öffnen oder schließen lassen. Diese Bewegung der Lamellen im Lamellenblock kann auch über ein separat am Gehäuse der Luftdüse angeordnetes Stellrad oder Bedienelement vorgenommen werden.

In FIG 7 und FIG 8 ist jeweils ein Schnitt durch das Schiebeelement 1 im Bereich A-A, wie in FIG 6 eingezeichnet, dargestellt. Es ist das Schiebeelement 1, das die Lamelle 2 zumindest an einer Seite formschlüssig umgreift, vorzugsweise in Einbaulage der Lamelle 2 in einen Lamellenblock einer Luftdüse an deren Oberseite, dargestellt. Das Schiebeelement 1 besteht aus dem Griffvorderteil 8 und dem Griffhinterteil 7, welche miteinander vorzugsweise mittels einer Steckverbindung verbindbar sind. Hierzu werden das Griffvorderteil 8 und das Griffhinterteil 7 auf die Lamelle 2, an der vorgesehenen Stelle der Lamelle 2, diese zumindest an einer Seite umgreifend, zusammengesteckt.

Mit dem Griffvorderteil 8 und dem Griffhinterteil 7 umschließt das Schiebeelement 1 die Lamelle 2 zumindest vorzugsweise an der Oberseite der Lamelle 2. In die Lamelle 2 ist eine Vertiefung 3 eingebracht. Im Schiebeelement 1, insbesondere an der Innenseite des Griffvorderteils 8, ist ein Magnet 4 angeordnet. Der Magnet 4 ist mit dem Schiebeelement 1 verbunden. Diese Verbindung ist alternativ und vorteilhaft in Form einer Verklebung oder Verklemmung des Magneten 4 im oder mit dem Griffvorderteil 8 realisiert. In die Vertiefung 3 der Lamelle 2 ist eine Profilschiene 6 eingelassen. Die Profilschiene 6 besteht aus ferromagnetischem oder magnetisierbaren Material, zumindest aus Teilen von ferromagnetischem oder magnetisierbarem Material. Der Magnet 4 des Schiebeelements 1 übt eine magnetische Kraft auf die Profilschiene 6, welche in der Vertiefung 3 der Lamelle 2 angeordnet ist, aus. Zwischen dem Magneten 4 und der Profilschiene 6 ist eine Beschichtung 5 vorhanden. Die Beschichtung 5 kann alternativ auf der Oberfläche des Magneten 4 oder auf der Oberfläche der Profilschiene 6 angeordnet sein.

Durch die Ausführung der Vertiefung 3 und der in der Vertiefung 3 angeordneten Profilschiene 6 ist es ausreichend, wenn der Magnet 4 mittels mindestens einer Führung, vorzugsweise zweier Führungen, im Griffvorderteil 8, geführt und/oder gehalten wird. Diese mindestens einer Führung umgreift oder umschließt den Magnet 4 formschlüssig und/oder kraftschlüssig. Eine Verklebung oder sonstige materialbeeinflussende Befestigung kann dann entfallen. Eine solche Ausführung ermöglicht zudem einen einfachen Zusammenbau, da der Magnet 4 lediglich in die vorgesehene Halterung oder zwischen die vorgesehenen Halterungen am Griffvorderteil 8 einzufügen ist. Es ist dann nur das Griffvorderteil 8 mit dem Griffhinterteil 7 über die Lamelle 2 zusammenzusetzen, wobei darauf zu achten ist, dass der Magnet 4 in der Profilschiene 6 zu liegen kommt.

Die Profilschiene 6 ist vorzugsweise in Form eines U-Profil oder eines L-Profils ausgestaltet. Es kann aber auch jede andere Form einer Profilschiene ausgewählt werden, es muss lediglich die Form der Profilschiene zur Form der Magneten 4 passen. Als besonders vorteilhaft hat sich die Ausführung als L-Profilschiene ergeben. Die Profilschiene 6 kann aber auch in der Weise ausgestaltet sein, dass diese in Form einer Metallschiene direkt in die Lamelle eingebracht ist, oder aber das die Vertiefung 3 eine metallische Beschichtung aufweist. Der Magnet 4 ist mit dem Schiebeelement 1, das in Längsrichtung über die Lamelle 2 in einem vorgegebenen Teilbereich verschiebbar ist, fest verbunden. Durch die Erstreckung der Vertiefung 3 entlang der Lamelle 2 und der Anordnung auf der Lamelle 2 ist der Schiebeweg des Schiebeelements 1 definierbar. Der Magnet 4 ist vorzugsweise als Dauermagnet ausgebildet.

Der Magnet 4 übt auf die Profilschiene 6 eine magnetische Kraft aus. Diese magnetische Kraft definiert die Bedienkraft, mittels welcher das Schiebeelement 1 entlang der Lamelle 2 verschiebbar ist. Der Magnet 4 ist zumindest teilweise und vorzugsweise in dem Bereich, in welchem ein Kontakt mit der Profilschiene 6 besteht, mit der Beschichtung 5 beschichtet. Bei der Beschichtung 5 handelt es sich vorzugsweise um thermoplastischen Kunststoff, Epoxidharz, Elastomere, Gleitlack oder ein sonstiges weiteres hierzu einsetzbares Material.

In einer alternativen Ausführung der Erfindung ist nicht der Magnet 4, sondern die Profilschiene 6 mit der Beschichtung 5 beschichtet.

Durch diese Beschichtung 5 wird beim Verschieben des Schiebeelementes 1 mit dem Magneten 4 entlang der Lamelle 2 in der Vertiefung 3 mit der Profilschiene 6 die Reibkraft, welche beim Verschieben des Schiebeelements 1 entlang der Lamelle 2 auftritt, und somit die Bedienkraft des Schiebeelementes 1 entlang der Lamelle 2 darstellt, definiert. Der Magnet 4 übt eine magnetische Anziehungskraft auf die Profilschiene 6 aus, welche senkrecht zur Profilschiene 6 wirkt. Diese Kraft ist für die Reibkräfte an den Laufflächen zwischen Magnet 4 und Profilschiene 6 und insbesondere der zwischen diesen angeordneten Beschichtung 5 verantwortlich und repräsentiert damit vorrangig die Bedienkraft, welche ein Bediener zum Verschieben des Schiebeelementes 1 entlang der Lamelle 2 ausüben muss.

In einer weiteren vorteilhaften Ausgestaltung der Erfindung wird anstelle der Profilschiene 6 mindestens ein Magnet in die Vertiefung 3 der Lamelle 2 integriert. Damit kann die magnetische Kraft noch besser ausgebildet und eingestellt werden, zugleich kann die Bedienkraft exakt dimensioniert werden. Durch eine spezielle Anordnung der Magnetpole der in der Lamelle 2 angeordneten Magnete, kann die Bedienkrafterzeugung durch Abstoßung bzw. Anziehung zwischen den Magneten in der Vertiefung 3 der Lamelle 2 und dem Magneten 4 im Schiebeelement 1 optimal eingestellt werden. Ein solches Anordnungsprinzip kann auch auf Rotationsbedienelemente übertragen werden.

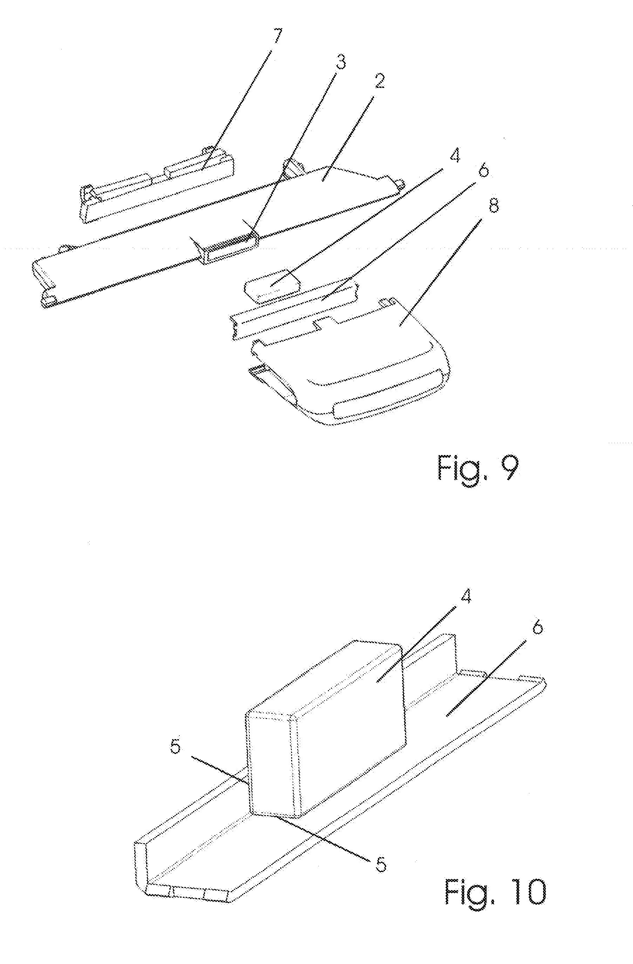

In FIG 9 ist das Schiebeelement 1 mit der Lamelle 2 in Explosionsdarstellung dargestellt. Hierbei sind das Griffvorderteil 8 und das Griffhinterteil 7 dargestellt. Beim Zusammenbau wird das Griffvorderteil 8 mit dem Magneten 4 über die Lamelle 2 geschoben, so dass der Magnet 4 in der Vertiefung 3 zu liegen kommt, so dann wird das Griffhinterteil 7 aufgesetzt und beide mechanisch verbunden. Es wird damit eine kraft- und/oder formschlüssige Verbindung durch eine Verklammerung anhand von Rippen, welche an dem Griffvorderteil 8 und dem Griffhinterteil 7 vorhanden sind, vorgenommen. Es bedarf somit keiner weiteren mechanischen oder chemischen Eingriffe, wie beispielsweise einer Verklebung.

In FIG 10 ist der prinzipielle Aufbau eines erfindungsgemäßen Schiebeelementes dargestellt. Es ist die Profilschiene 6 dargestellt, welche in FIG 10 in Form einer L-Profilschiene ausgeführt ist. Alternativ kann auch eine U-Profilschiene zum Einsatz kommen. Auf der Profilschiene 6 ist der Magnet 4 angeordnet. Der Magnet 4 übt eine magnetische Kraft in X- und Y-Richtung auf die Profilschiene 6 aus und wird somit durch die magnetische Kraft auf der Profilschiene 6 gehalten. Bei Bewegung des Magneten 4 entlang der Profilschiene 6, wird anhand der Reibungskraft, zwischen der Profilschiene 6 und dem Magnet 4, die Bedienkraft definiert. Allerdings ist bekanntermaßen zunächst die Haftkraft zu überwinden. Bei einem direkten Kontakt zwischen der Profilschiene 6 und dem Magneten 4 ist diese relativ groß, so dass es bei der Bedienung zu ruckartigen Bewegungen führt, da zunächst die höhere Haftkraft überwunden werden muss. Daher ist zwischen dem Magneten 4 und der Profilschiene 6 die Beschichtung 5 angeordnet. Diese Beschichtung 5 trennt die Oberfläche der Profilschiene 6 und die Oberfläche des Magneten 4. Durch die Wahl der Beschichtung 5 ist es möglich die Kraft, welche notwendig ist um den Magneten 4 entlang der Profilschiene 6 zu verschieben, zu definieren. Zugleich erzeugt die Beschichtung 5 beim Verschieben des Magneten 4 entlang der Profilschiene 6 ein sattes Betätigungsgefühl. Es lässt sich so durch die geeignete Auswahl der Beschichtung 5 ein besonders angenehmes Bediengefühl für einen Nutzer einstellen. Das Bediengefühl und die Bedienkraft sind durch eine geschickte Auswahl des Magneten 4, der Profilschiene 6 und der Beschichtung 5 möglich. Auch durch die Auswahl der Dicke der Beschichtung 5 kann hierauf Einfluss genommen werden.

## Patentansprüche

1. Einrichtung zur Dämpfung der Bewegung eines entlang einer Lamelle verschiebbar angeordneten Bedienelementes, wobei die Lamelle mit dem verschiebbar angeordneten Bedienelement Bestandteil einer Luftdüse zur Führung eines Luftstroms aus einem Luftzuführschacht oder aus einer Luftzuführleitung in Heizungs-, Lüftungs- oder Klimaanlagen, insbesondere für Fahrgasträume in Kraftfahrzeugen, ist, wobei die Luftdüse aus einem Gehäuse besteht, das in einen Wanddurchbruch einsetzbar oder hinter einem solchen montierbar ist und einen rückseitigen Anschluss für einen Luftzuführschacht oder eine Luftzuführleitung sowie eine vorderseitige Luftausströmöffnung aufweist, wobei die Lamelle (2) und das verschiebbar angeordnete Bedienelement (1) jeweils einen zumindest partiell magnetisch wirksamen Teilbereich (4a, 4b, 4c, 4d, 6a, 6c, 6f) aufweisen und bei Überlagerung des zumindest partiell magnetisch wirksamen Teilbereichs (4a, 4b, 4c, 4d) des verschiebbar angeordneten Bedienelements (1) mit dem zumindest partiell magnetisch wirksamen Teilbereich (6a, 6c, 6f) der Lamelle (2) sich eine magnetische Anziehungskraft in dieser deckungsgleichen Verschiebeposition zwischen dem verschiebbar angeordneten Bedienelement (1) und der Lamelle (2) ausbildet, die gegenüber einer nicht deckungsgleichen Verschiebeposition wesentlich erhöht ist, wobei zwischen dem verschiebbar angeordneten Bedienelement (1) und der Lamelle (2) mittels der magnetischen Anziehungskraft der zumindest partiell wirksamen Teilbereiche (4a, 4c, 4d, 4e, 6a, 6c, 6f) eine Haftkraft im stationären Zustand des verschiebbar angeordneten Bedienelements (1) gegenüber der Lamelle (2) und eine Reibkraft bei relativer Bewegung des verschiebbar angeordneten Bedienelements (1) entlang der Lamelle (2) ausbildet und einen haptischen Eindruck einer Rastung vermittelt oder das Vorhandensein von Rastmitteln hervorruft, wenn das verschiebbar angeordnete Bedienelement (1) über die deckungsgleiche Verschiebeposition gleitet.

2. Einrichtung nach Patentanspruch 1, **dadurch gekennzeichnet, dass** zwischen dem verschiebbar angeordneten Bedienelement (1) und der Lamelle (2) zumindest partiell eine Beschichtung (5) aus einem Elastomer oder einem Polymer eingebracht ist und/oder dass die Beschichtung (5) aus thermoplastischem Kunststoff, Epoxidharz, Elastomer oder Gleitlack besteht.

3. Einrichtung nach Patentanspruch 1, **dadurch gekennzeichnet, dass** am oder im verschiebbar angeordneten Bedienelement (1) mindestens ein Magnet (4) angeordnet ist und dass der Magnet (4) einen vorstehenden Ansatz (4a) aufweist, der in Wirkverbindung mit einem Ansatz (6a, 6c) an einer an oder in der Lamelle (2) angeordneten Führungsschiene (6) tritt und bei deckungsgleicher Verschiebeposition die Raststellung bewirkt.

4. Einrichtung nach Patentanspruch 3, **dadurch gekennzeichnet, dass** der Magnet (4) sich selbst zentriert, sobald er an der Führungsschiene (6), die zumindest an einer Stelle in Form einer Winkelschiene ausgeführt ist, in den die Winkelschiene bildenden Bereich geführt ist.

5. Einrichtung nach Patentanspruch 3 oder 4, **dadurch gekennzeichnet, dass** der mindestens eine Magnet (4) ein Dauermagnet ist oder mehrere gemeinsam wirkende Dauermagneten sind und die Führungsschiene (6) eine Schiene mit kammartigen Ansätzen (6c) ist, gegenüber denen ein Dauermagnet (4) mit wellenförmiger Haptik verschiebbar ist und/oder die kammartigen Ansätze (6c) den die Winkelschiene bildenden Bereich realisieren.

6. Einrichtung nach einem der vorangehenden Patentansprüche 1 bis 5, **dadurch gekennzeichnet, dass** an und/oder im verschiebbar angeordneten Bedienelement (1) oder an und/oder in der Lamelle (2) ferromagnetische Elemente angeordnet sind oder die Lamelle oder das verschiebbar angeordnete Bedienelement (1) zumindest teilweise aus magnetisierbarem Material bestehen.

7. Einrichtung nach einem der vorangehenden Patentansprüche 1 bis 6, **dadurch gekennzeichnet, dass** die Betätigungskraft zur Bewegung des verschiebbar angeordneten Bedienelements (1) gegenüber der Lamelle (2) vorrangig von dem mindestens einen Magneten (4) beeinflussbar ist und die Relativbewegung des verschiebbar angeordneten Bedienelements (1) gegenüber der Lamelle (2) eine lineare Bewegung ist und die Führungsschiene (6) begrenzende Endanschläge (6d, 6e) aufweist, gegen die der Magnet (4) fährt oder ein Rastansatz (4d) vorgesehen ist, der in mindestens eine Rastmulde (6f) in der Führungsschiene (6) beim Verschieben einrastet und über Gleitflächen (4e) wieder herausrückbar ist.

8. Einrichtung nach einem der vorangehenden Patentansprüche 1 bis 7, **dadurch gekennzeichnet, dass** das verschiebbar angeordnete Bedienelement (1) die Lamelle (2) zumindest an einer Seite formschlüssig umgreift und das verschiebbar angeordnete Bedienelement (1) aus einem Griffvorderteil (8) und einem Griffhinterteil (7) besteht, welche miteinander über eine Steckverbindung verbindbar sind und/oder der mindestens eine Magnet (4) im Griffvorderteil (8) des verschiebbar angeordneten Bedienelements (1) angeordnet ist und der mindestens eine Magnet (4) im Griffvorderteil (8) von mechanischen Halterungen gehalten ist oder dass der mindestens eine Magnet (4) mit dem Griffvorderteil (8) verklebt ist.

9. Einrichtung nach Patentanspruch 1 oder 8, **dadurch gekennzeichnet, dass** die Lamelle (2) eine Vertiefung (3) aufweist und/oder die Vertiefung (3) U-förmig ist und/oder in die Vertiefung (3) mindestens ein weiterer Magnet oder zumindest partiell ferromagnetisches oder magnetisierbares Material eingebracht ist und/oder in die Vertiefung (3) eine Profilschiene eingelassen oder eingefügt ist und/oder die Profilschiene eine L-Schiene oder eine U-Schiene ist.

10. Einrichtung nach Patentanspruch 2 oder 9, **dadurch gekennzeichnet, dass** die Profilschiene aus einem ferromagnetischen oder magnetisierbaren Material oder zumindest aus Teilen von ferromagnetischem oder magnetisierbarem Material besteht und/oder die Profilschiene oder die Vertiefung (3) oder der mindestens eine Magnet (4) die Beschichtung (5) aufweist.

11. Einrichtung nach Patentanspruch 9 oder 10, **dadurch gekennzeichnet, dass** im angeordneten Zustand des verschiebbar angeordneten Bedienelements (1) auf der Lamelle (2) der mindestens eine Magnet (4) in der Vertiefung (3) liegt.

12. Einrichtung nach einem der vorangehenden Patentansprüche, **dadurch gekennzeichnet, dass** die Bedienkraft der Einrichtung durch die Art und Dicke der Beschichtung (5), die Stärke des mindestens einen Magneten (4) und die Art der magnetischen Eigenschaft der Profilschiene (6) oder durch die Vertiefungen (3) einstellbar ist.

13. Einrichtung nach einem der vorangehenden Patentansprüche, **dadurch gekennzeichnet, dass** das Gehäuse mindestens einen Lamellenblock aufweist, in welchen die Lamelle (2) mit dem verschiebbar angeordnete Bedienelement (1) einsetzbar und mit weiteren Lamellen gekoppelt ist.

## Claims

1. Device for damping the movement of a control element arranged to be displaceable along a slat, wherein the slat together with the displaceably arranged control element is a component of an air nozzle for guidance of an air flow out of an air feed shaft or out of an air feed duct in heating, ventilating or air-conditioning installations, particularly for passenger compartments in motor vehicles, wherein the air nozzle consists of a housing, which is insertable into a wall passage or mountable behind such and has at the rear side a connection for an air feed shaft or an air feed duct and at the front side an air outflow opening, wherein the slat (2) and the displaceably arranged control element (1) each have an at least partially magnetically effective sub-region (4a, 4b, 4c,4d, 6a, 6c, 6f) and on superimposition of the at least partially magnetically effective sub-region (4a, 4b, 4c,4d) of the displaceably arranged control element (1) by the at least partially magnetically effective sub-region (6a, 6c, 6f) of the slat (2) a magnetic attraction force forms in this congruent displacement position between the displaceably arranged control element (1) and slat (2), which force is substantially increased relative to a non-congruent displacement position, wherein an adhesive force in the stationary state of the displaceably arranged control element (1) relative to the slat (2) and a friction force in the case of relative movement of the displaceably arranged control element (1) along the slat (2) are formed between the displaceably arranged control element (1) and the slat (2) by means of the magnetic attraction force of the at least partially effective sub-regions (4a, 4c, 4d, 4e, 6a, 6c, 6f) and impart a tactile impression of detenting or the presence of detent means when the displaceably arranged control element (1) slides over the congruent displacement position.

2. Device according to claim 1, **characterised in that** a coating (5) of an elastomer or a polymer is applied at least partly between the displaceably arranged control element (1) and the slat (2) and/or the coating (5) consists of thermoplastic plastics material, epoxy resin, elastomer or slide lacquer.

3. Device according to claim 1, **characterised in that** at least one magnet (4) is arranged at or in the displaceably arranged control element (1) and that the magnet (4) has a protruding protrusion (4a) which enters into operative connection with a protrusion (6a, 6c) at a guide rail (6), which is arranged at or in the slat (2), and produces the detent setting in the congruent displacement position.

4. Device according to claim 3, **characterised in that** the magnet (4) self-centres as soon as it is guided at the guide rail (6), which is constructed at least at one place in the form of an angle rail, in the region forming the angle rail.

5. Device according to claim 3 or 4, **characterised in that** the at least one magnet (4) is a permanent magnet or a plurality of permanent magnets acting in common and the guide rail (6) is a rail with comb-like protrusions (6c), relative to which a permanent magnet (4) is displaceable with wave-like tactility and/or the comb-like protrusions (6c) realise the region forming the angle rail.

6. Device according to any one of the preceding claims 1 to 5, **characterised in that** ferromagnetic elements are arranged at and/or in the displaceably arranged control element (1) or at and/or in the slat (2) or the slat or the displaceably arranged control element (1) consists at least partly of magnetisable material.

7. Device according to any one of the preceding claims 1 to 6, **characterised in that** the actuating force for movement of the displaceably arranged control element (1) relative to the slat (2) can be influenced preferentially by the at least one magnet (4) and the relative movement of the displaceably arranged control element (1) with respect to the slat (2) is a linear movement and the guide rail (6) has limiting end abutments (6d, 6e), against which the magnet (4) travels, or a detent projection (4d) is provided, which detents in at least one detent trough (6f) in the guide rail (6) during the displacement and is disengageable again by way of slide surfaces (4e).

8. Device according to any one of the preceding claims 1 to 7, **characterised in that** the displaceably arranged control element (1) mechanically positively engages around the slat (2) at at least one side and the displaceably arranged control element (1) consists of a grip front part (8) and a grip rear part (7), which are interconnectible by way of a plug connection, and/or the at least one magnet (4) is arranged in the grip front part (8) of the displaceably arranged control element (1) and the at least one magnet (4) is held in the grip front part (8) by mechanical retaining means or that the at least one magnet (4) is glued to the grip front part (8).

9. Device according to claim 1 or 8, **characterised in that** the slat (2) has a depression (3) and/or the depression (3) is U-shaped and/or at least one further magnet or at least partially ferromagnetic or magnetisable material is applied in the depression (3) and/or a profile rail is let into or inserted into the depression (3) and/or the profile rail is an L-rail or a U-rail.

10. Device according to claim 2 or 9, **characterised in that** the profile rail consists of a ferromagnetic or magnetisable material or at least of parts of ferromagnetic or magnetisable material and/or the profile rail or the depression (3) or the at least one magnet (4) has the coating (5).

11. Device according to claim 9 or 10, **characterised in that** the at least one magnet (4) lies in the depression (3) in the arranged state of the displaceably arranged control element (1) on the slat (2).

12. Device according to any one of the preceding claims, **characterised in that** the operating force of the device is settable by the kind and thickness of the coating (5), the strength of the at least one magnet (4) and the kind of magnetic property of the profile rail (6) or by the depressions (3).

13. Device according to any one of the preceding claims, **characterised in that** the housing comprises at least one slat block, into which the slat (2) together with the displaceably arranged control element (1) is insertable and coupled with further slats.

## Revendications

1. Dispositif d'amortissement du mouvement d'un élément de commande agencé de manière mobile le long d'une lamelle, où la lamelle constitue, avec l'élément de commande agencé de manière mobile, un composant d'une buse d'air pour le guidage d'un flux d'air d'une trémie d'amenée d'air ou d'une conduite d'amenée d'air vers des installations de chauffage, de ventilation ou de climatisation, en particulier pour des habitacles de véhicules automobiles, où la buse d'air se compose d'un boîtier pouvant être mis en place dans une traversée de paroi ou être monté derrière celle-ci, et présente un raccord arrière pour une trémie d'amenée d'air ou une conduite d'amenée d'air ainsi qu'un orifice avant de refoulement d'air, où la lamelle (2) et l'élément de commande (1) agencé de manière mobile présentent chacun une zone partielle (4a, 4b, 4c, 4d, 6a, 6c, 6f) au moins en partie magnétiquement active, et où en cas de superposition de la ou des zones partielles (4a, 4b, 4c, 4d) au moins en partie magnétiquement actives de l'élément de commande (1) agencé de manière mobile avec la ou les zones partielles (6a, 6c, 6f) au moins en partie magnétiquement actives de la lamelle (2), une force d'attraction magnétique se forme dans cette position de déplacement coïncidente entre l'élément de commande (1) agencé de manière mobile et la lamelle (2), laquelle est sensiblement accrue par rapport à une position de déplacement non coïncidente, et où, entre l'élément de commande (1) agencé de manière mobile et la lamelle (2), une force d'adhérence par rapport à la lamelle (2) se forme au moyen de la force d'attraction magnétique des zones partielles (4a, 4c, 4d, 4e, 6a, 6c, 6f) au moins en partie magnétiquement actives, en état stationnaire de l'élément de commande (1) agencé de manière mobile, et une force de friction en cas de déplacement relatif de l'élément de commande (1) agencé de manière mobile le long de la lamelle (2), laquelle transmet une impression haptique d'enclenchement ou provoque la présence de moyens d'enclenchement si l'élément de commande (1) agencé de manière mobile glisse sur la position de déplacement coïncidente.

2. Dispositif selon la revendication 1, **caractérisé en ce qu'**un revêtement (5) composé d'un élastomère ou d'un polymère est appliqué au moins partiellement entre l'élément de commande (1) agencé de manière mobile et la lamelle (2), et/ou **en ce que** ledit revêtement (5) est en matière thermoplastique, en résine époxy, en élastomère ou en vernis antifriction.

3. Dispositif selon la revendication 1, **caractérisé en ce qu'**au moins un aimant (4) est disposé sur ou dans l'élément de commande (1) agencé de manière mobile et **en ce que** l'aimant (4) présente un appendice (4a) saillant, lequel entre en liaison active avec un appendice (6a, 6c) sur un rail de guidage (6) disposé sur ou dans la lamelle (2) et provoque la position d'enclenchement en cas de position de déplacement coïncidente.

4. Dispositif selon la revendication 3, **caractérisé en ce que** l'aimant (4) se centre automatiquement dès qu'il est guidé dans la partie formant la cornière sur le rail de guidage (6), lequel est à au moins un endroit réalisé sous la forme d'une cornière.

5. Dispositif selon la revendication 3 ou 4, **caractérisé en ce que** le ou les aimants (4) sont un ou plusieurs aimants permanents agissant ensemble et le rail de guidage (6) est un rail avec des appendices (6c) en forme de dents de peigne, par rapport auxquels un aimant permanent (4) à haptique ondulée est déplaçable, et/ou **en ce que** les appendices (6c) en forme de dents de peigne réalisent la zone formant la cornière.

6. Dispositif selon l'une des revendications 1 à 5, **caractérisé en ce que** des éléments ferromagnétiques sont disposés sur et/ou dans l'élément de commande (1) agencé de manière mobile ou sur et/ou dans la lamelle (2), ou la lamelle ou l'élément de commande (1) agencé de manière mobile sont au moins partiellement en matériau magnétisable.

7. Dispositif selon l'une des revendications 1 à 6, **caractérisé en ce que** la force d'actionnement pour le déplacement de l'élément de commande (1) agencé de manière mobile par rapport à la lamelle (2) est influençable en premier lieu par le ou les aimants (4), et **en ce que** le déplacement relatif de l'élément de commande (1) agencé de manière mobile par rapport à la lamelle (2) est un déplacement linéaire et le rail de guidage (6) comporte des butées finales (6d, 6e) de limitation contre lesquelles bute l'aimant (4), ou une saillie d'enclenchement (4d) est prévue, laquelle s'enclenche dans au moins un creux d'enclenchement (6f) du rail de guidage (6) lors du déplacement et peut en être dégagée au moyen de surfaces de glissement (4e).

8. Dispositif selon l'une des revendications 1 à 7, **caractérisé en ce que** l'élément de commande (1) agencé de manière mobile enserre par correspondance de forme la lamelle (2) au moins sur une face, et l'élément de commande (1) agencé de manière mobile se compose d'une pièce de saisie avant (8) et d'une pièce de saisie arrière (7) pouvant être assemblées par connexion à fiche, et/ou le ou les aimants (4) sont disposés dans la pièce de saisie avant (8) de l'élément de commande (1) agencé de manière mobile, et le ou les aimants (4) sont maintenus par des supports mécaniques dans la pièce de saisie avant (8), ou **en ce que** le ou les aimants (4) sont collés sur la pièce de saisie avant (8).

9. Dispositif selon la revendication 1 ou 8, **caractérisé en ce que** la lamelle (2) présente un évidement (3), et/ou l'évidement (3) est en forme de U, et/ou au moins un autre aimant ou un matériau au moins partiellement ferromagnétique ou magnétisable est mis en place dans l'évidement (3), et/ou un rail profilé est encastré ou inséré dans l'évidement (3), et/ou le rail profilé est un rail en L ou en U.

10. Dispositif selon la revendication 2 ou 9, **caractérisé en ce que** le rail profilé est en matériau ferromagnétique ou magnétisable ou est au moins constitué de pièces en matériau ferromagnétique ou magnétisable, et/ou le rail profilé ou l'évidement (3) ou le ou les aimants (4) sont pourvus du revêtement (5).

11. Dispositif selon la revendication 9 ou 10, **caractérisé en ce qu'**en état d'agencement de l'élément de commande (1) agencé de manière mobile sur la lamelle (2), le ou les aimants (4) reposent dans l'évidement (3).

12. Dispositif selon l'une des revendications précédentes, **caractérisé en ce que** la force de commande du dispositif peut être ajustée par la nature et l'épaisseur du revêtement (5), l'intensité du ou des aimants (4) et le type de propriété magnétique du rail profilé (6), ou par les évidements (3).

13. Dispositif selon l'une des revendications précédentes, **caractérisé en ce que** le carter comporte au moins un bloc de lamelles où la lamelle (2) peut être mise en place avec l'élément de commande (1) agencé de manière mobile et être accouplée à d'autres amortissements.
